## Europäisches Patentamt

## European Patent Office

## Office européen des brevets

(11) Veröffentlichungsnummer: **0 104 362**
**B1**

(12) # EUROPÄISCHE PATENTSCHRIFT

(45) Veröffentlichungstag der Patentschrift:
**05.10.88**

(51) Int. Cl.⁴: **G 05 D 23/19, F 24 D 19/10**

(21) Anmeldenummer: **83107524.7**

(22) Anmeldetag: **30.07.83**

(54) Steuerverfahren für die Aufladung eines Warmwasserspeichers beziehungsweise für die Beheizung wenigstens eines Raumes.

(30) Priorität: 27.08.82 DE 8224185 U
08.03.83 DE 8306590 U

(43) Veröffentlichungstag der Anmeldung:
04.04.84 Patentblatt 84/14

(45) Bekanntmachung des Hinweises auf die Patenterteilung:
05.10.88 Patentblatt 88/40

(84) Benannte Vertragsstaaten:
AT BE CH DE FR GB IT LI LU NL SE

(56) Entgegenhaltungen:
CONTROL AND INSTRUMENTATION, Band 13, Nr. 12,
Dezember 1981 M. INGLIS "Save energy with the help of
the microprocessor optimiser", Seiten 43, 45
IKZ, Nr. 5, 1980, Fachteil "Lüftung Klima Regelung" E.
RUOSCH "Der Einsatz des Mikrocomputers in der
HLK-Technik", Seiten 78, 80, 82, 84, 85

(73) Patentinhaber: Joh. Vaillant GmbH u. Co., Berghauser
Strasse 40 Postfach 10 10 20, D-5630 Remscheid 1 (DE)
(84) Benannte Vertragsstaaten: DE IT LU SE

(73) Patentinhaber: COFRABEL N.V., Goldenhopestraat 15,
B-1620 Drogenbos (BE)
(84) Benannte Vertragsstaaten: BE

(73) Patentinhaber: VAILLANT S.A.R.L, 4, Rue des Oliviers
Orly-Sénia 326, F-94537 Rungis Cedex (FR)
(84) Benannte Vertragsstaaten: FR

(73) Patentinhaber: VAILLANT Ges.m.b.H,
Forchheimergasse 7 Postfach 56, A-1233 Wien (AT)
(84) Benannte Vertragsstaaten: AT

(73) Patentinhaber: Vaillant Ltd., Vaillant House Medway City
Estate Trident Close, Rochester Kent ME2 4EZ (GB)
(84) Benannte Vertragsstaaten: GB

(73) Patentinhaber: SCHONEWELLE B.V., Ellermanstraat 17,
NL-1099 BX Amsterdam (NL)
(84) Benannte Vertragsstaaten: NL

(73) Patentinhaber: Vaillant GmbH, Riedstrasse 8,
CH-8953 Dietikon 1 (CH)
(84) Benannte Vertragsstaaten: CH LI

(72) Erfinder: Taag, Jürgen, Joachimstrasse 14,
D-5630 Remscheid 1 (DE)

(74) Vertreter: Heim, Johann-Ludwig, c/o Joh. Vaillant GmbH
u. Co Postfach 10 10 20 Berghauser Strasse 40,
D-5630 Remscheid 1 (DE)

ACTORUM AG

## Beschreibung

Die vorliegende Erfindung bezieht sich auf ein Steuerverfahren für die Aufladung eines Warmwasserspeichers beziehungsweise für die Beheizung wenigstens eines Raumes gemäss dem Oberbegriff der nebengeordneten Ansprüche 1 und 2 und auf eine Steuervorrichtung zur Durchführung des Verfahrens.

Bekannte Warmwasserspeicher sind mit 2-Punkt-Reglern ausgestattet, deren Sollwerte von einer Uhr auf Tag- und Nachtwerte umgeschaltet werden. Der Speicher wird regelmässig dann geladen, wenn der Istwert des Speicherinhalts die Einschaltschwelle des 2-Punkt-Reglers erreicht, und zwar unabhängig davon, wie kurz oder lang dies vor Umschaltzeiten geschieht. So kann es beispielsweise vorkommen, dass relativ kurz vor Ablauf des Hochtemperaturzeitraums, also kurz vor einem Umschaltpunkt in Richtung tieferer Sollwerte, der Speicher gerade noch geladen wird, obwohl dies mangels Nachfrage nach Brauchwasser eigentlich gar nicht notwendig wäre und der Istwert des Speichers nach der Sollwertumschaltung oberhalb der neuen Sollwerte liegen würde.

Ebenso sind bekannte Heizungsanlagen häufig mit Reglern ausgestattet, deren Sollwerte von einer Uhr auf Tag- und Nachtsollwerte umgeschaltet werden. Der Wärmeerzeuger wird regelmässig dann eingeschaltet, wenn der Istwert der Raumtemperatur die Einschaltschwelle des Reglers erreicht, und zwar unabhängig davon, wie kurz oder lang dies vor Umschaltzeiten von Tag-Heiz- auf den Nacht-Absenkbetrieb geschieht. So kann es beispielsweise vorkommen, dass relativ kurz vor Ablauf des Hochtemperaturzeitraums, also kurz vor einem Umschaltpunkt in Richtung tiefere Sollwerte, der Wärmeerzeuger gerade noch eingeschaltet wird, obwohl dies mangels Wärmebedarfs eigentlich gar nicht notwendig wäre und der Istwert der Raumtemperatur nach der Sollwertumschaltung oberhalb der neuen Sollwerte liegen würde.

Aus der Zeitschrift «Control and Instrumentation», Band 13 (1981) Nr. 12, Seiten 43 und 45, ist ein Optimierungsrechner für eine Raumheizung bekannt geworden, bei dem der Einschaltzeitpunkt für die Schnellaufheizung zu Beginn der Belegungszeit empirisch selbstadaptierend ermittelt wird. In gleicher Weise wird auch die Abschaltung zu Ende des Belegungszeitraumes vorverlegt, und eine bestimmte Raumtemperaturabsenkung zum Ende der Belegungszeit zugelassen.

Aus der Zeitschrift IKZ, Heft 5, 1980, Seiten 78, 80, 82, 84 und 85, ist es bekannt, Mikrocomputer zur Steuerung von Heizungen zu verwenden. So wird durch einen Mikrocomputer die Heizung rechtzeitig eingeschaltet, wobei die Restwärme des Gebäudes berücksichtigt wird, weiterhin kann die Kesseltemperatur witterungsabhängig gefahren werden.

Bei diesem Stand der Technik ist es aber nicht möglich, beim einmal erfolgten Abschalten der Heizung gegen Ende des Belegungszeitraumes des zugehörigen Gebäudes Änderungen noch zu berücksichtigen.

Der vorliegenden Erfindung liegt mithin die Aufgabe zugrunde, die Ladung eines Speichers bzw. das Einschalten eines Wärmeerzeugers dann zu unterdrücken, wenn bei einer Auswertung des Temperatur-Istwertes die Speicher- bzw. Raum-Isttemperatur im Umschaltzeitpunkt des Sollwertes um einen zu vernachlässigenden Betrag unterhalb der Einschaltschwelle liegt. Das geschieht dann, wenn keine Nachfrage nach Brauchwasser auftritt bzw. wenn kaum Wärmebedarf herrscht.

Die Lösung dieser Aufgabe gelingt mit den kennzeichnenden Merkmalen der unabhängigen Ansprüche.

Weitere Ausgestaltungen und besonders vorteilhafte Weiterbildungen sind Gegenstand der Unteransprüche beziehungsweise gehen aus der nachfolgenden Beschreibung hervor, die zwei Ausführungsbeispiele der Erfindung anhand schematischer Darstellungen einer Heizungsanlage, mehrere Diagramme und Blockschaltbilder erläutert.

Es zeigen:

Fig. 1 eine hydraulische Schaltung einer bekannten Heizungsanlage zur Aufladung eines Brauchwasserspeichers,

Fig. 2 ein Blockschaltbild des Aufbaus einer Steuer- bzw. Regeleinrichtung,

die Fig. 3 bis 6 Diagramme, wobei Fig. 3 ein bekanntes Regelverfahren zeigt, und

Fig. 7 eine bekannte Schaltung einer Raumheizungsanlage.

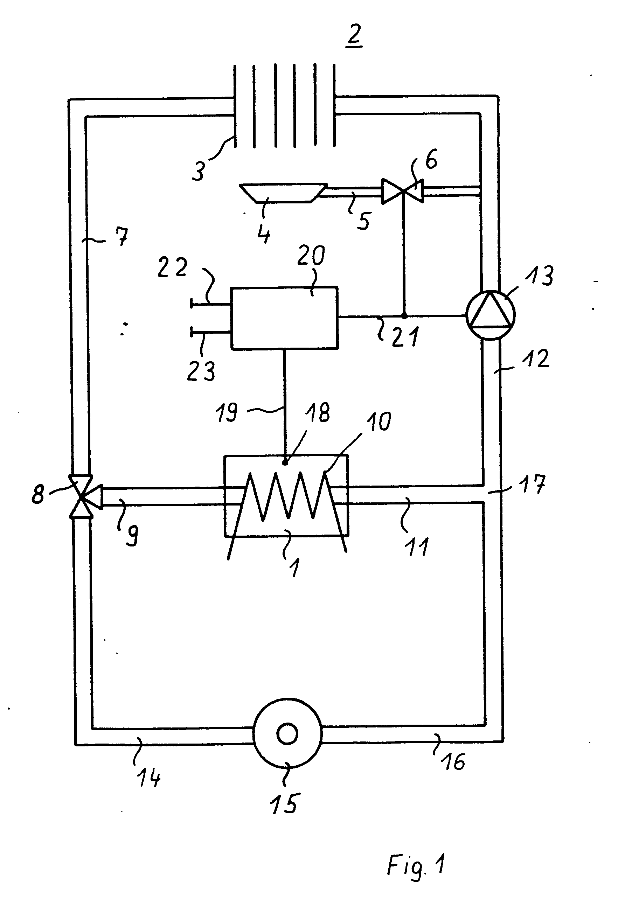

In allen sieben Figuren bedeuten gleiche Bezugszeichen jeweils die gleichen Einzelheiten. In der Fig. 1 ist 1 ein Brauchwasserspeicher mit etwa 100 bis 400 Liter Fassungsvermögen, der die Brauchwassernachfrage eines Einfamilienhauses oder einer grösseren Etagenwohnung decken soll. Der Brauchwasserspeicher wird von einer Wärmequelle 2 aufgeheizt, die aus einem Wärmetauscher 3 besteht, der von einem Brenner 4 beheizt wird, der über eine Brennstoffzuleitung 5, in der ein Magnetventil 6 angeordnet ist, mit Brennstoff versorgt wird. An die Wärmequelle 2 ist eine Vorlaufleitung 7 angeschlossen, die zu einem Vorrangumschaltventil 8 führt. Vom Vorrangumschaltventil 8 führt eine Brauchwasserspeicher-Vorlaufleitung 9 zum Brauchwasserspeicher 1, den die Leitung im Rahmen einer Rohrschlange 10 als Wärmetauscher durchzieht. Der Auslass des Brauchwasserspeichers 1 ist über eine Brauchwasserbereiter-Rücklaufleitung 11 mit einer Rücklaufleitung 12 verbunden, die unter Einschaltung einer Umwälzpumpe 13 zurück zum Wärmetauscher 3 führt. Ein zweiter Auslass des Vorrangumschaltventils 8 führt zu einer Heizkreis-Vorlaufleitung 14 und damit zu einer Vielzahl parallel und/oder in Serie geschalteter Heizkörper 15, von denen eine Heizkörperrücklaufleitung 16 zu einem Verbindungspunkt 17 führt, in den die Brauchwasserbereiter-Rücklaufleitung 11 einmündet.

Die Brauchwassertemperatur im Inneren des Brauchwasserspeichers 1 wird von einem Temperaturfühler 18 als Istwertgeber abgefühlt und über eine Messleitung 19 einer Regel- und Steuereinrichtung 20 aufgegeben. Die Regel- und Steuereinrichtung 20 weist als Stellglieder das Magnetventil 6 und den Antriebsmotor der Pumpe 13 auf, die über eine Stelleitung 21 angesteuert werden. An der Steuer- und Regeleinrichtung sind mehrere Sollwertgeber 22 und 23 vorgesehen, mit denen die Höhe des Sollwertes im Tag- und Nachtbereich, die Grösse der noch zulässigen Regelabweichung im Umschaltzeitpunkt und der wählbare Zeitpunkt vor dem Umschaltzeitpunkt in Richtung auf tiefere Sollwerte vorgegeben werden können.

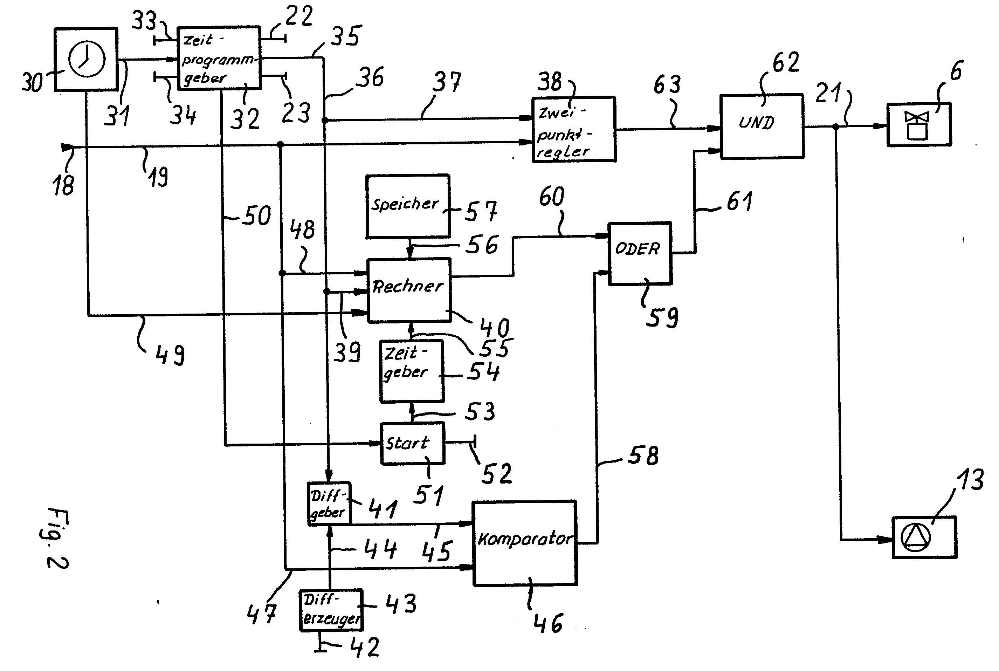

In der Fig. 2 ist die Regel- und Steuereinrichtung 20 als Blockschaltbild dargestellt. In der Steuer- und Regeleinrichtung ist eine Uhr 30 angeordnet, der laufende Zeitwert wird als elektrische Spannung über eine Leitung 31 auf einen Zeitprogrammgeber 32 gegeben. An dem Zeitprogrammgeber sind neben den Sollwertgebern 22 und 23 weitere Einsteller 33 und 34 vorgesehen. An dem Einsteller 22 wird der Zeitpunkt eingestellt, bei dem der Sollwert auf tiefere Sollwerte heruntergeführt wird, also der Beginn der Nachtabsenkung. Am Einsteller 23 wird der Zeitpunkt eingestellt, bei dem die Nachtabsenkung zu Ende ist, der Speicher also wieder auf einen höheren Sollwert gefahren wird. Am Einsteller 33 wird die Höhe des Sollwertes eingestellt, und zwar die Höhe des Tagsollwertes, am Einsteller 34 wird die Höhe des Nachtsollwertes eingestellt.

Ein Ausgang 35 des Zeitprogrammgebers ist auf eine Leitung 36 gegeben, von der eine Leitung 37 abzweigt, die zu einem 2-Punkt-Regler 38 führt. Auf den zweiten Eingang des 2-Punkt-Reglers ist die Leitung 19 des Istwertgebers 18 geschaltet. Von der Leitung 36 zweigt eine weitere Leitung 39 ab, die zu einem Rechenwerk 40 führt. Die Leitung 36 ist auf einen Differenzgeber 41 geführt, an dem eine von einem Einsteller 42 vorgebbare Differenz von einem Differenzwerterzeuger 43 erzeugt und über eine Leitung 44 auf den Differenzgeber gegeben wird. Auf der Leitung 45 steht der Wert der Leitung 36 an einem Komparator 46 an, von dem die eingestellte Differenz abgezogen ist. Der zweite Eingang des Komparators ist eine Leitung 47, die an die Leitung 19 angeschlossen ist. Von der Leitung 47 zweigt eine Leitung 48 ab, die einen zweiten Eingang des Rechenwerks 40 bildet. Das Rechenwerk ist über eine weitere Leitung 49 mit der Uhr 30 verbunden. Ein weiterer Ausgang des Zeitprogrammgebers ist mittels einer Leitung 50 an einen Startgeber 51 angeschlossen, der mit einem Einsteller 52 versehen ist, an dem der Zeitpunkt eingestellt werden kann, der bis zum Umschaltzeitpunkt den Zeitraum liefert, in dem das Steuerverfahren nach der Erfindung arbeitet. Der Startgeber 51 ist über eine Leitung 53 mit einem Zeitgeber 54 verbunden, der über eine Leitung 55 auf das Rechenwerk 40 geschaltet ist. Mit dem Rechenwerk ist weiterhin über eine Leitung 56 ein Speicher 57 verbunden, der als Messwertspeicher dient.

Ein Ausgang des Komparators 46 ist über eine Leitung 58 mit einem Oderglied 59 verbunden, dessen anderer Eingang von einer Leitung 60 gebildet ist, die den Ausgang des Rechenwerks erreicht.

Ein Ausgang des Odergliedes bildet mit einer Leitung 61 einen Eingang eines Undgliedes 62, dessen anderer Eingang von einer Leitung 63 gebildet ist, die mit dem Ausgang des 2-Punkt-Reglers 38 verbunden ist. Ein Ausgang des Undgliedes ist von der Stelleitung 21 gebildet, die das Magnetventil 6 beziehungsweise den Antriebsmotor der Pumpe 13 an Betriebsspannung legen kann.

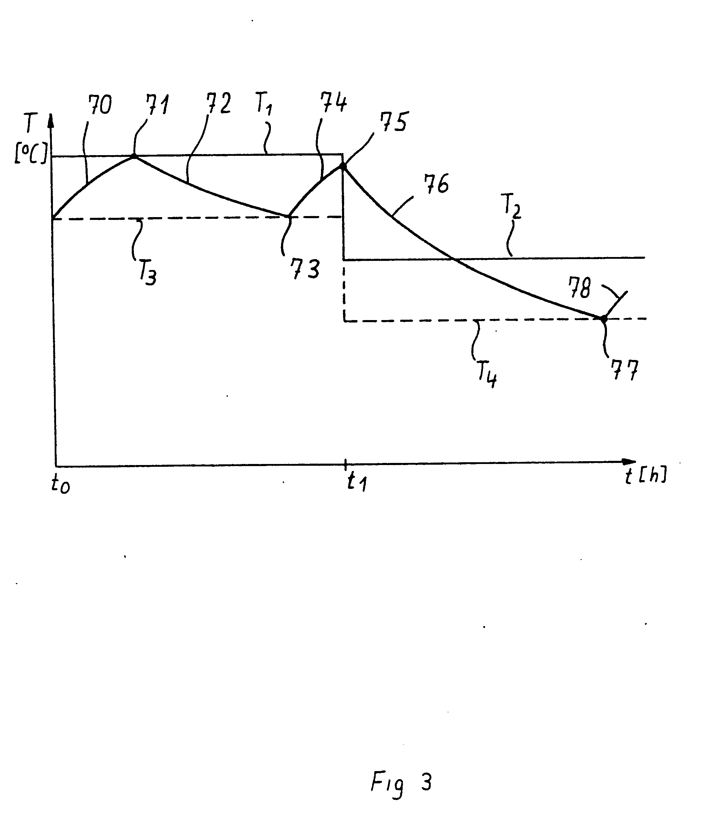

Zur Funktion des eben beschriebenen Blockschaltbildes wird auf die Diagramme gemäss den Figuren 3 bis 6 verwiesen.

Das Diagramm nach Fig. 3 beschreibt den Stand der Technik, wie er ohne Einsatz der Erfindung bei einer Heizungsanlage gemäss Fig. 1 entstehen würde.

In der Abszisse ist die Zeit aufgetragen, in der Ordinate die Temperatur. Bis zu einem Zeitpunkt t1 herrscht ein – relativ hoher – Sollwert T1, der zum Zeitpunkt t1 auf einen niedrigeren Nachtsollwert T2 umgeschaltet wird. Die Sollwerte T1 und T2 stellen zugleich die Ausschaltwerte der Regelvorrichtung 20 dar. Darunter liegen Einschaltsollwerte T3 und T4.

Es wird nun davon ausgegangen, dass zum Zeitpunkt t0 der Speicher gemäss einer Kurve 70 aufgeladen wird. Die Ladung ist beendet im Punkt 71, wenn nämlich der Istwert der Kurve 70 die Kurve T1 schneidet. Anschliessend wird der Speicher gemäss einem Kurvenzug 72 entladen, sei es durch Brauchwasseranforderung oder durch Selbstentladung. Beide Vorgänge unterscheiden sich nur in der Steilheit der Kurve 72. Erreicht im Punkt 73 die Kurve 72 die Kurve T3, so findet eine erneute Aufladung gemäss einem Kurvenstück 74 statt, und zwar unabhängig davon, wie dicht der Punkt 73 vor dem Abszissenwert t1 liegt. Das kann im Extremfall bedeuten, dass der Speicher ganz kurz vor dem Umschaltzeitpunkt t1 aufgeladen wird, obwohl das von der Nachfrage her gar nicht notwendig wäre. Im Umschaltzeitpunkt t1 wechselt beim Punkt 75 der Sollwert, so dass die weitere Ladung unterbrochen wird und die Speicherkennlinie gemäss dem anschliessenden Kurvenstück 76 wieder abfällt. Der Speichertemperatur-Istwert fällt so lange, bis im Punkt 77 die Kurve T4 geschnitten wird, anschliessend beginnt wieder eine erneute Aufladung gemäss einem Kurvenstück 78.

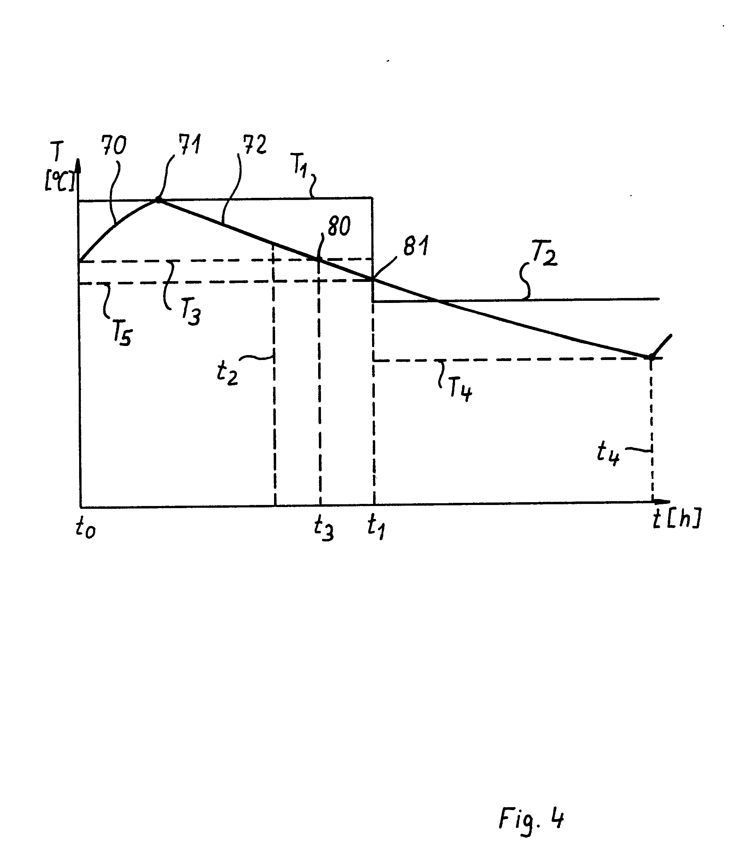

Die Erfindung hingegen arbeitet nach den Diagrammen der Fig. 4 bis 6. Wird auch hier wieder im Zeitpunkt t0 aufgeladen gemäss dem Kurvenstück 70, so wird diese Aufladung bei 71 wieder unterbrochen. Der Speichertemperatur-Istwert fällt gemäss der Kurve 72, und zwar zunächst bis zu einem Zeitpunkt t2. Das ist der Zeitpunkt, der am Einsteller 52 am Startgeber eingestellt wird. Ab Zeitpunkt t2 beginnt der Überwachungszeitraum vor dem Sollwertumschaltpunkt t1. Erreicht die Kurve 72 nunmehr die Kurve T3 im Punkt 80 zum Zeitpunkt t3, so wird mit der Steuer- und Regeleinrichtung die Änderungsgeschwindigkeit der Kurve 72 abgefragt. Die Änderungsgeschwindigkeit wird unter Zuhilfenahme des Zeitgebers 54 im Rechenwerk 40 ermittelt, nachdem die jeweils ersten Werte im Speicher 57 gespeichert wurden. Werden zu einstellbaren Zeitpunkten Temperaturwerte gemessen, so kann der Rechner daraus die Steigung der Kurve 72 im Zeitpunkt t3 errechnen.

Der laufende Zeitwert ist von der Uhr 30 bekannt, der Zeitpunkt t1 ist am Zeitprogrammgeber eingestellt. Der Istwert der Speichertemperatur liegt über die Leitung 19 am 2-Punkt-Regler 38 an.

Bis zum Zeitpunkt t2 arbeitet der 2-Punkt-Regler 38 normal, das heisst, er gibt einen Stellbefehl über die Leitung 63 auf das Undglied 62, dessem anderer Eingang immer spannungsführend ist. Da der Istwert über die Leitung 47 am Komparator 46 anliegt und in seinem Wert grösser ist als der Wert T3, von dem über den Differenzwerterzeuger 43 ein bestimmter Wert abgezogen wird, so dass ein Temperaturwert T5 entsteht, gibt der Komparator 46 an das Oderglied 59 kein Signal ab. Der Ausgang 60 des Rechenwerks 40 ist dann spannungslos, wenn ein Nachladen nicht erforderlich ist. Das ist in diesem Falle (Fig. 4) dann der Fall, wenn die Steigung der Kurve 72 zum Zeitpunkt t3 so gerichtet ist, dass die Verlängerung der Kurve 72 über den Punkt 80 hinaus einen Schnittpunkt 81 zum Zeitpunkt t1 ergeben würde, der in seinem Ordinatenwert über dem Wert T5 liegt. Da im Zeitpunkt t1 der Sollwert umgeschaltet wird, fällt die Kurve kontinuierlich weiter, so dass zum Zeitpunkt t4 dann geladen wird, wenn die Kurve 72 die Kurve T4 schneidet.

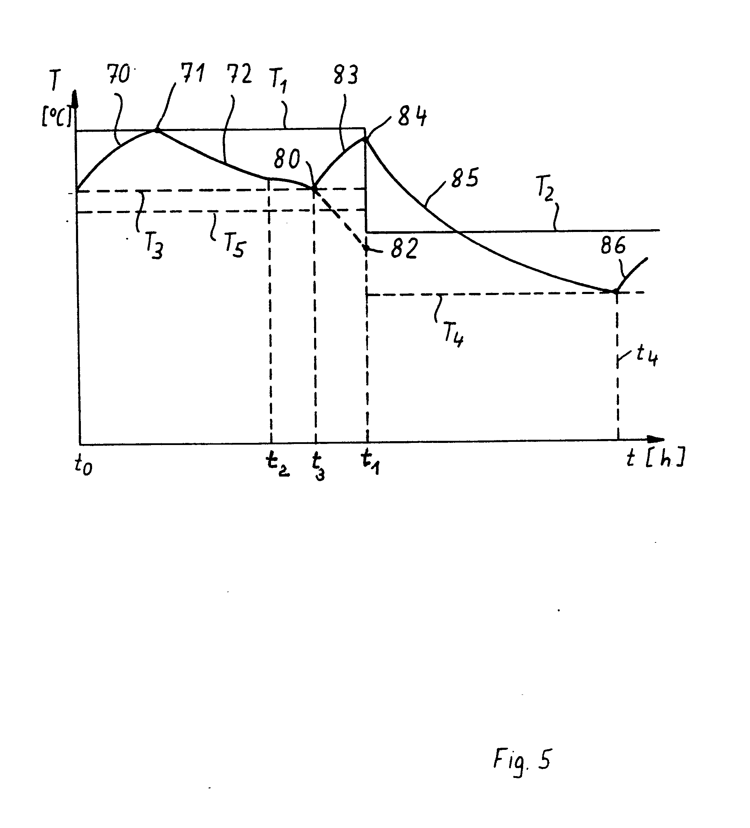

Ermittelt hingegen das Rechenwerk eine Steigung der Kurve 72 im Zeitpunkt t3 einer solchen Grösse, dass der Schnittpunkt 81 im Zeitpunkt t1 tiefer liegen würde als der Wert T5, dann wird die Nachladung eingeleitet. Dieser Zustand ist in der Fig. 5 dargestellt. Im Zeitpunkt 80 ist aufgrund einer kurz vorher liegenden Zapfwasseranforderung die Kurve stärker gefallen, so dass der weitere Kurvenverlauf der Kurve 72 zu einem Schnittpunkt 82 führt, der im Zeitpunkt t1 unterhalb des Wertes T5 liegt. Damit wird im Zeitpunkt 80 die Nachladung gemäss der Kurve 83 eingeleitet. Die Nachladung wird im Punkt t1 unterbrochen, weil der Sollwert auf tiefere Werte umgeschaltet wird. Somit ergibt sich ein Punkt 84, von dem der Speicher-Istwert gemäss der Kurve 85 absinkt, bis im Zeitpunkt t4 eine erneute Nachladung gemäss einer Kurve 86 stattfindet.

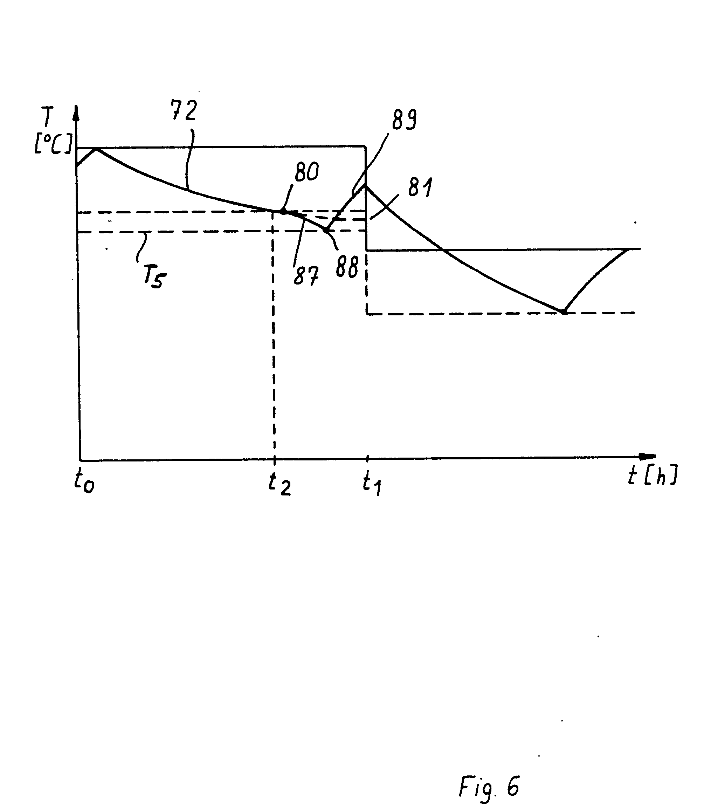

Aus der Fig. 6 geht hervor, dass die Steuer- und Regelvorrichtung 20 auch dann eine Nachladung des Speichers veranlasst, wenn innerhalb des Zeitraums zwischen t2 und t1 die Entladekennlinie 72 des Speichers nach Durchfahren des Punktes 80, zu dem eigentlich eine Nachladung nicht erforderlich wäre, weil die Verlängerung der Kurve 72 zu dem Punkt 81 führen würde, der zum Zeitpunkt t1 oberhalb des Temperaturwertes T5 liegt, die Kurve 72 durch plötzliche Zapfwasseranforderung gemäss der Kurve 87 stark sinkend verläuft. Im Punkt 88 schneidet die Kurve 87 die Kurve T5, so dass anschliessend eine Speichernachladung gemäss der Kurve 89 resultiert.

Obwohl die Änderungsgeschwindigkeit der Kurve 72 im Punkt 80 die Nachladung nicht erforderlich machte, bewirkt ein Erreichen des Temperaturwertes T5 dennoch eine Nachladung. Dies wird durch den Komparator 46 veranlasst, der über die Leitung 58 auf das Oderglied 59 dann Spannung gibt, wenn der Istwert, der über die Leitung 47 zugeführt wird, kleiner wird als der Sollwert, der im Differenzgeber erzeugt wird.

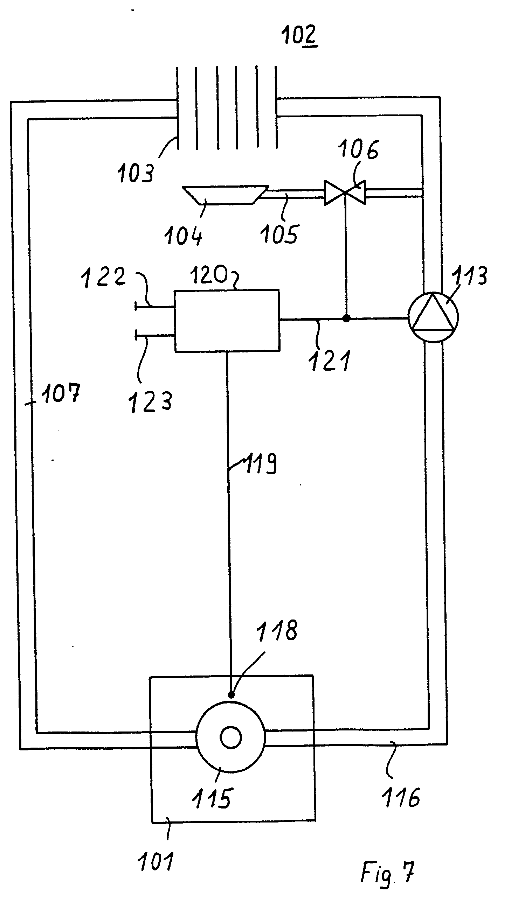

In der Fig. 7 ist 101 ein Raum eines Einfamilienhauses oder einer grösseren Etagenwohnung mit einem Heizkörper dargestellt. Der Raum wird von einer Wärmequelle 102 aufgeheizt, die aus einem Wärmetauscher 103 besteht, der von einem Brenner 104 beheizt wird, der über eine Brennstoffzuleitung 105, in der ein Magnetventil 106 angeordnet ist, mit Brennstoff versorgt wird. An die Wärmequelle 102 ist eine Vorlaufleitung 107 angeschlossen, die zu einer Vielzahl parallel und/oder in Serie geschalteter Heizkörper 115, von denen eine Heizkörperrücklaufleitung 116 über eine Umwälzpumpe 113 zurück zum Wärmetauscher 103 führt.

Die Raumtemperatur wird von einem Temperaturfühler 118 als Istwertgeber abgefühlt und über eine Messleitung 119 einer gemäss Fig. 2 bis 6 aufgebauten Regel- und Steuereinrichtung 120 aufgegeben. Die Regel- und Steuereinrichtung 120 weist als Stellglieder das Magnetventil 106 und den Antriebsmotor der Pumpe 113 auf, die über eine Stelleitung 121 angesteuert werden. An der Steuer- und Regeleinrichtung sind mehrere Sollwertgeber 122 und 123 vorgesehen, mit denen die Höhe des Sollwertes im Tag- und Nachtbereich, die Grösse der noch zulässigen Regelabweichung im Umschaltzeitpunkt und der wählbare Zeitpunkt vor dem Umschaltzeitpunkt in Richtung auf tiefere Sollwerte vorgegeben werden können.

## Patentansprüche

1. Steuerverfahren für die Aufladung eines Warmwasserspeichers (1), der im Laufe der Zeit mittels zweier jeweils aus einem Einschalt-Sollwert ($T_3$, $T_4$) und einem Ausschalt-Sollwert ($T_1$, $T_2$) bestehender, umschaltbarer Temperatur-Sollwert-Paare eines Zweipunktreglers (38) von einer Wärmequelle (2) aufgeladen wird und bei dem eine Nachladung vor dem Umschalten von einem höheren ($T_1$, $T_3$) auf ein abgesenktes Sollwertpaar ($T_2$, $T_4$) unterdrückt wird, wobei eine bestimmte Regelabweichung zur Unterschreitung des höheren Einschalt-Sollwertes ($T_3$) zugelassen wird, dadurch gekennzeichnet, dass innerhalb einer vorgebbaren Zeitspanne (t2–t1) vor dem Zeitpunkt (t1) des Umschaltens von einem höheren ($T_1$) auf einen abgesenkten Ausschalt-Sollwert ($T_2$) jedes Mal zum Zeitpunkt des Unterschreitens des höheren Einschalt-Sollwertes ($T_3$) durch den Temperatur-Istwert die Änderungsgeschwindigkeit dieses Istwertes ermittelt wird und die Aufladung des Speichers (1) vor diesem Umschaltzeitpunkt (t1) dann unterdrückt wird, wenn diese Änderungsgeschwindigkeit zu der innerhalb eines bestimmten Unterschreitungsbereiches ($T_3$–$T_5$) liegenden Re-

gelabweichung zum Umschaltzeitpunkt (t1) führen würde, und dass die Aufladung des Speichers (1) dann freigegeben wird, wenn dieser Istwert unterhalb dieses bestimmten Unterschreitungsbereiches ($T_3$–$T_5$) des Einschalt-Sollwertes ($T_3$) zu diesem Umschaltzeitpunkt (t1) fällt.

2. Steuerverfahren für die Beheizung wenigstens eines Raumes (101), der im Laufe der Zeit mittels zweier jeweils aus einem Einschalt-Sollwert ($T_3$, $T_4$) und einem Ausschalt-Sollwert ($T_1$, $T_2$) bestehender, umschaltbarer Temperatur-Sollwert-Paare eines Zweipunktreglers (38) von einer Wärmequelle (102) beheizt wird und bei dem eine Nachladung vor dem Umschalten von einem höheren ($T_1$, $T_3$) auf ein abgesenktes Sollwertpaar ($T_2$, $T_4$) unterdrückt wird, wobei eine bestimmte Regelabweichung zur Unterschreitung des höheren Einschalt-Sollwertes ($T_3$) zugelassen wird, dadurch gekennzeichnet, dass innerhalb einer vorgebbaren Zeitspanne (t2–t1) vor dem Zeitpunkt (t1) des Umschaltens von einem höheren ($T_1$) auf einen abgesenkten Ausschalt-Sollwert ($T_2$) jedes Mal zum Zeitpunkt des Unterschreitens des höheren Einschalt-Sollwertes ($T_3$) durch den Temperatur-Istwert die Änderungsgeschwindigkeit dieses Istwertes ermittelt wird und die Beheizung des Raumes (101) vor diesem Umschaltzeitpunkt (t1) dann unterdrückt wird, wenn diese Änderungsgeschwindigkeit zu der innerhalb eines bestimmten Unterschreitungsbereiches ($T_3$–$T_5$) liegenden Regelabweichung zum Umschaltzeitpunkt (t1) führen würde, und dass die Beheizung des Raumes (101) dann freigegeben wird, wenn dieser Istwert unterhalb dieses bestimmten Unterschreitungsbereiches ($T_3$–$T_5$) des Einschalt-Sollwertes ($T_3$) zu diesem Umschaltzeitpunkt (t1) fällt.

3. Steuervorrichtung zur Durchführunmg des Verfahrens nach Anspruch 1 oder 2, dadurch gekennzeichnet, dass der Ausgang des Zweipunktreglers (38) mit dem einen Eingang (63) eines logischen Gatters (62) verbunden ist, dessen Ausgang (21) mit dem zugeordneten Stellglied (6, 13) und dessen anderer Eingang (61) mit dem Ausgang eines zweiten logischen Gatters (59) verbunden ist, wobei an den einen Eingang (60) des zweiten Gatters (59) ein Ausgang eines Rechenwerkes (40), welches die Änderungsgeschwindigkeit des Istwertes in der vorgebbaren Zeitspanne ($t_2$–$t_1$) ermittelt, und an dessen zweiten Eingang (58) ein Komparator (46) angeschlossen ist, an dessen beiden Eingängen einmal der Istwert, zum anderen ein Temperatur-Sollwert liegt, der um eine einstellbare, dem bestimmten Unterschreitungsbereich ($T_3$–$T_5$) der Regelabweichung entsprechenden Differenz vermindert ist.

**Claims**

1. A method of controlling the charging of a hot water reservoir (1), which is charged in the course of time by a heat source (2) under the control of a two-position controller (38) with reference to two shiftable pairs of set point temperatures, each of which pair consists of a turn-on set point ($T_3$, $T_4$) and a turn-off set point ($T_1$, $T_2$), wherein a re-charging will be suppressed before the shift from a higher pair of set points ($T_1$, $T_3$) to a lower pair of set points ($T_2$, $T_4$), and a certain deviation below the higher turn-on set point ($T_3$) is permitted, characterized in that the rate of change of the actual temperature is determined whenever the actual temperature decreases below the higher turn-on set point ($T_3$) during a predeterminable period of time (t2–t1) before the time (t1) of the shift from a higher turn-off set point ($T_1$) to a lower turn-off set point ($T_2$), the re-charging of the reservoir (1) before that shifting time (t1) is suppressed when that rate of change would result in a deviation within a certain lower range ($T_3$–$T_5$) at the shifting time (t1), and the re-charging of the reservoir (1) will be permitted when that actual value will decrease below said lower range ($T_3$–$T_5$) of the turn-on set point ($T_3$) until that shifting time (t1).

2. A method of controlling the heating of a room (101), which is heated in the course of time by a heat source (2) under the control of a two-position controller (38) with reference to two shiftable pairs of set point temperatures, each of which pair consists of a turn-on set point ($T_3$, $T_4$) and a turn-off set point ($T_1$, $T_2$), wherein a reheating of the room will be suppressed before the shift from a higher pair of set points ($T_1$, $T_3$) to a lower pair od set points ($T_2$, $T_4$), and a certain deviation below the higher turn-on set point ($T_3$) is permitted, characterized in that the rate of change of the actual temperature is determined whenever the actual temperature decreases below the higher turn-on set point ($T_3$) during a predeterminable period of time (t2–t1) before the time (t1) of the shift from a higher turn-off set point ($T_1$) to a lower turn-off set point ($T_2$), the reheating of the room (101) before that shifting time (t1) is suppressed when that rate of change would result in a deviation within a certain lower range ($T_3$–$T_5$) at the shifting time (t1), and the reheating of the room (101) will be permitted when that actual value will decrease below said lower range ($T_3$–$T_5$) of the turn-on set point ($T_3$) until that shifting time (t1).

3. A control system for carrying out the method according to claim 1 or 2, characterized in that the output of the two-position controller (38) is connected to one input (63) of a logic gate (62) having an output (21) which is connected to the associated final control element (6, 13) and having another input (61) which is connected to the output of a second logical gate (59), one input (60) of the second gate (59) is connected to an output of an arithmetic unit (40) for determining the rate of change of the actual temperature during the predeterminable period of time (t2–t1), and said second gate has a second input (58) that is connected to a comparator (48), which at its two inputs is respectively connected to receive the actual temperature and a set point temperature which has been reduced by an adjustable differential corresponding to the predetermined permissible lower range ($T_3$–$T_5$) for the deviation.

## Revendications

1. Procédé de réglage pour le chauffage d'un accumulateur-d'eau (1) qui, moyennant deux couples de consignes de température commutables commandant un régulateur tout ou rien (38) et comprenant chacun une consigne de mise en marche (T$_3$, T$_4$) et une consigne de mise hors marche (T$_1$, T$_2$), est chauffé par un source calorifique (2) et dont le rechauffage, avant la commutation du couple de consignes élevées (T$_1$, T$_3$) sur le couple de consignes plus basses (T$_2$, T$_3$), est supprimé, un certain écart de réglage en moins par rapport à la consigné élevée (T$_3$) étant admis, caractérisé par le fait qu'à l'intérieur d'un laps de temps (t2−t1) réglable précédant le moment (t1) de la commutation d'une consigne de mise hors marche élevée (T$_1$) sur une consigne de mise hors marche plus basse (T$_2$), chaque fois que la température effective reste au-dessous de la consigne de mise en marche élevée (T$_3$), la vitesse à laquelle varie cette valeur effective est mesurée pour empêcher le rechauffage de l'accumulateur (1) avant ce point de commutation (t1) si cette vitesse, au moment de la commutation (t1), se traduisant par l'écart de consigne se situant à l'intérieur d'une certaine marge (T$_3$−T$_5$), et que le rechauffage de l'accumulateur (1) est admis si cette valeur effective, au-dessous de cette marge (T$_3$−T$_5$) de la consigne (T$_3$), chute au moment de la commutation (t1).

2. Procédé de réglage pour le chauffage d'au moins un local d'habitation (101) qui, moyennant deux couples de consignes de température commutables commandant un régulateur tout ou rien (38) et comprenant chacun une consigne de mise en marche (T$_3$, T$_4$) et une consigne de mise hors marche (T$_1$, T$_2$), est chauffé par un source calorifique (102) et dont le rechauffage, avant la commutation du couple de consignes élevées (T$_1$, T$_3$) sur le couple de consignes plus basses (T$_2$, T$_4$), est supprimé, un certain écart de réglage en moins par rapport à la consigné élevée (T$_3$) étant admis, caractérisé par le fait qu'à l'intérieur d'un laps de temps (t2−t1) réglable précédant le moment (t1) de la commutation d'une consigne de mise hors marche élevée (T$_1$) sur une consigne de mise hors marche plus basse (T$_2$), chaque fois que la température effective reste au-dessous de la consigne de mise en marche élevée (T$_3$), la vitesse à laquelle varie cette valeur effective est mesurée pour empêcher le rechauffage du local (101) avant ce point de commutation (t1) si cette vitesse, au moment de la commutation (t1), se traduisait par l'écart de consigne se situant à l'intérieur d'une certaine marge (T$_3$−T$_5$), et que le rechauffage du local (101) est admis si cette valeur effective, au-dessous de cette marge (T$_3$−T$_5$) de la consigne (T$_3$), chute au moment de la commutation (t1).

3. Dispositif pour l'application du procédé de réglage suivant la revendication 1 ou 2, caractérisé par le fait que la sortie du régulateur tout ou rien (38) est reliée à une entrée (63) d'un circuit logique (62) dont la sortie (21) est reliée à l'organe de réglage respectif (6, 13) et dont l'autre entrée (61) est reliée à la sortie d'un deuxième circuit logique (59), l'entrée (60) du deuxième circuit (59) étant reliée à une sortie d'un calculateur (40) qui relève la vitesse à laquelle varie la valeur effective durant le laps de temps réglable (t2−t1), et dont l'autre entrée (58) est reliée à un comparateur (46) aux deux entrées duquel sont appliquées d'une part la valeur effective, et de l'autre une consigne de température, diminuée d'une différence réglable correspondant à la marge donnée (T$_3$−T$_5$) de l'écart de consigne.

Fig. 1

Fig. 2

Fig 3

Fig. 4

Fig. 5

Fig. 6

102

103

106

104    105

122    120    113

107

123    121

119

118

115    116

101

Fig. 7